# EUROPEAN PATENT SPECIFICATION

(11) **EP 3 782 580 B1**
(45) Date of publication and mention of the grant of the patent: **28.05.2025**
(21) Application number: 19791581.2
(22) Date of filing: 26.04.2019
(51) Int. Cl.: A61C 15/02, A46B 9/04, A46B 9/02, A46B 3/04

(54) **INTERDENTAL CLEANING TOOL**
INTERDENTALREINIGUNGSWERKZEUG
OUTIL DE NETTOYAGE INTERDENTAIRE

(30) Priority: 27.04.2018 JP 2018087037
(43) Date of publication of application: 24.02.2021
(73) Proprietor: Kobayashi Pharmaceutical Co., Ltd., Chuo-ku Osaka-shi, Osaka 541-0045 (JP)
(72) Inventor: KIKKAWA, Tasuku, Ibaraki-shi, Osaka 567-0057 (JP)
(74) Representative: Hoffmann Eitle
(86) International application number: PCT/JP2019/017969
(87) International publication number: WO 2019/208783

(56) References cited:
- EP-A2- 0 680 707
- WO-A1-2017/038654
- WO-A1-2019/057516
- JP-A- 2009 240 493
- JP-A- 2016 521 159
- JP-A- H0 923 928
- JP-A- H10 117 846
- US-A1- 2010 015 567

## Description

### Technical Field

The present invention relates to an interdental cleaning tool.

### Background Art

Conventionally, an interdental cleaning tool for cleaning an interdental space is known. For example, WO 2013/176297 A1 discloses an interdental cleaning tool including a base structure portion made of synthetic resin, and a soft portion made of elastomer. The base structure portion includes a core base structure portion insertable in an interdental space, and a handling base structure portion having a shape that can be held by fingers. The soft portion includes a covering portion that covers a portion of an outer circumferential surface of the core base structure portion, and a plurality of protruding portions each protruding outward from an outer circumferential surface of the covering portion.

The shape of the core base structure portion covered by the soft portion is designed to gradually become thinner from a base end side to a top end side based on a shape of an interdental space. Since the top end side portion of the core base structure portion is thin, a user can insert the soft portion covering the top end side portion in a corner of the triangular interdental space (so-called a triangular space) to clean the corner of the triangular space. The core base structure portion is thick at a location distant from the top end toward the base end side, so that the portion of the core base structure portion distant from the top end toward the base end side is inadequate for cleaning the corner of the triangular space. But the soft portion covering the portion of the core base structure portion distant from the top end toward the base end side abuts strongly against the side surfaces of left and right teeth forming the triangular space to perform a high cleaning effect on the side surfaces of the teeth.

Further examples of previously known interdental cleaning tools are derivable from EP 0 680 707 A2, US 2010/015567 A1, which forms the basis for the preamble of the two-part form of claim 1, WO 2019/057516 A1, WO 2017/038654 A1 as well as JP H09 23928 A.

### Summary of Invention

### Problems to be Solved by the Invention

The thin top end side portion of the core base structure portion is easily insertable in the corner of the triangular space but a wide space is likely to be formed between the outer circumferential surface of the core base structure portion and the oral tissues. The wide space may cause a plurality of protruding portions disposed on the top end side portion of the core base structure portion to deform without tightly contacting the oral tissues. Thus, a conventional interdental cleaning tool has a low cleaning capability at a location corresponding to the top end side portion of the core base structure portion. There is a room for improvement in this point.

Meanwhile, at a portion of the core base structure portion distant from the top end toward the base end side, the interdental cleaning tool has a high capability of cleaning the side surfaces of the teeth. However, since the size of the triangular space is different among users, a plurality of protruding portions formed on the portion of the core base structure portion distant from the top end toward the base end side might be caught by the oral tissues forming a narrow triangular space, which results in the portion of the core base structure portion distant from the top end toward the base end side not being inserted in the narrow triangular space. That is, the portion which is made thick to effectively clean the side surfaces of the teeth might not be used effectively for a narrow triangular space. There is also a room for improvement in this point.

An object of the present invention is to provide an interdental cleaning tool that has a high capability of cleaning a corner of a triangular space, and also has a high capability of cleaning triangular spaces of various sizes.

### Solution to Problem

The above-mentioned problems and objects are solved by means of an apparatus according to claim 1. Distinct embodiments are derivable from the dependent claims. An interdental cleaning tool according to an aspect of the present invention includes a base portion including a shaft portion that extends from a base end side to a top end side so as to be insertable in an interdental space and gradually becomes thinner from the base end side to the top end side, a top end side cleaning portion including a top end side body covering a top end side portion of the shaft portion, and a plurality of top end side bristles protruding outward from an outer circumferential surface of the top end side body, and a base end side cleaning portion including a base end side body covering a portion of the shaft portion further in the base end side than the top end side body, and a plurality of base end side bristles protruding outward from an outer circumferential surface of the base end side body. The top end side cleaning portion is molded with a molding material having a higher hardness than a molding material molded into the base end side cleaning portion.

In the embodiment, the top end side cleaning portion covering the thin top end side portion can be suitably used for cleaning a corner of the triangular space. Since the top end side cleaning portion has a higher hardness than the base end side cleaning portion, the top end side bristle of the top end side cleaning portion is less susceptible to deformation and tightly contacts the oral tissues forming the corner of the triangular space, and thus has a high cleaning capability. Since the portion of the shaft portion covered by the base end side cleaning portion provided further in the base end side than the top end side cleaning portion is thicker than the portion of the shaft portion covered by the top end side cleaning portion, the base end side cleaning portion tightly contacts the side surfaces of the left and right teeth forming the triangular space to effectively clean the side surfaces. Since the base end side cleaning portion has a lower hardness than the top end side cleaning portion, the base end side bristle is susceptible to deformation and less likely to be caught by the oral tissues. Thus, the base end side cleaning portion is easily inserted in a narrow triangular space and has a high capability of cleaning the side surfaces of the left and right teeth.

In the configuration, the top end side cleaning portion may have a hue different from a hue of the base end side cleaning portion.

In the configuration, since the top end side cleaning portion and the base end side cleaning portion has different hues, the user can visually recognize the difference in physical properties between the top end side cleaning portion and the base end side cleaning portion. In addition, provided with a colorful outer surface with a plurality of hues, the interdental cleaning tool is given an excellent appearance.

In the configuration, the top end side cleaning portion may be made of a composite material containing elastomer and a reinforcing material.

Since the top end side cleaning portion according to the configuration is made of a composite material containing elastomer and a reinforcing material, the top end side bristle of the top end side cleaning portion has a higher rigidity than a conventional cleaning portion made only of elastomer, and thus the corner of the triangular space can effectively be cleaned.

### Advantageous Effects of Invention

An interdental cleaning tool described above has a high capability of cleaning a corner of a triangular space, and also has a high capability of cleaning triangular spaces of various sizes.

### Brief Description of Drawings

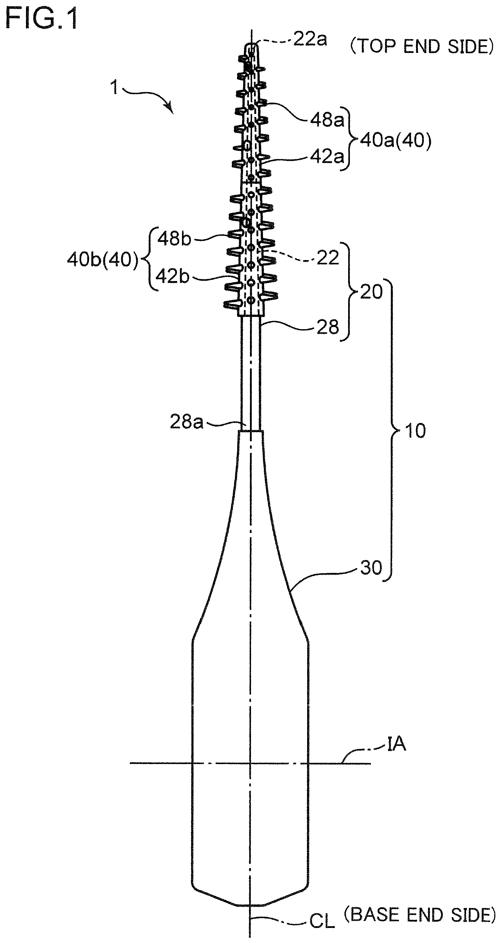

FIG. 1 is a schematic front view of an illustrative interdental cleaning tool.

### Description of Embodiment

FIG. 1 is a schematic front view of an illustrative interdental cleaning tool 1. With reference to FIG. 1, the interdental cleaning tool 1 will be described.

In FIG. 1, a term "base end side" and a term "top end side" are given. The term "base end side" indicates a side close to fingers of a user when the interdental cleaning tool 1 is held by the user. The term "top end side" indicates the opposite side of the base end side. A structure of the interdental cleaning tool 1 will be described using these terms as reference. The terms given in FIG. 1 are used only for clarifying the description and not by means of limiting the interpretation.

The interdental cleaning tool 1 includes a base portion 10 of which base end side can be held by fingers of a user and top end side is insertable in an approximately triangular interdental space (hereinafter referred to as "triangular space") by the user, and a cleaning portion 40 that covers a top end portion of the base portion 10. The base portion 10 provides the interdental cleaning tool 1 with a suitable hardness to prevent the interdental cleaning tool 1 from unnecessarily bending when inserted in the triangular space. The cleaning portion 40 covering the top end portion of the base portion 10 is made of a material having a lower hardness than the base portion 10, and prevents the hard base portion 10 from directly making contact with the oral tissues (that is, the teeth and the gum forming the triangular space). The cleaning portion 40 is formed to directly contact the oral tissues and scrape out the deposit from the oral tissues. The top end portion of the base portion 10 covered by the cleaning portion 40 having a suitable hardness as described above serves as a core material that prevents the cleaning portion 40 from unnecessarily bending when the interdental cleaning tool 1 is inserted in the triangular space.

The base portion 10 is made of a synthetic resin such as polypropylene, polyethylene, ABS, polybutylene terephthalate, polycarbonate, polyethylene terephthalate, polystyrene, and polyacetal. In the embodiment, the base portion 10 is made of polypropylene.

To describe the shape of the base portion 10, a central axis CL extending from the base end side to the top end side (or in the opposite direction) and a perpendicular axis IA that is perpendicular to the central axis CL are illustrated in FIG. 1. Hereinafter in the description, the extending direction of the central axis CL is referred to as "axial direction".

The base portion 10 includes a grip portion 30 disposed in the base end side, and a shaft portion 20 having a bar shape extending from the grip portion 30 to the top end side along the central axis CL. The grip portion 30 has a form of a thin plate having a large dimension in the extending direction of the perpendicular axis IA, and a small dimension in a virtual axis (not shown) perpendicular to both the perpendicular axis IA and the central axis CL to be held by the fingers of the user. The shaft portion 20 extending from the grip portion 30 to the top end side along the central axis CL has a form of a bar having a thickness insertable in the triangular space. The shaft portion 20 is longer than the grip portion 30 in the axial direction. An end portion at which the shaft portion 20 is connected to the grip portion 30 is hereinafter referred to as "base end portion 28a". An end portion of the shaft portion 20 opposite to the base end portion 28a is hereinafter referred to as "insertion end portion 22a". The shaft portion 20 gradually becomes thinner from the base end portion 28a to the insertion end portion 22a.

A predetermined section of the shaft portion 20 from the insertion end portion 22a to the base end side is covered by the cleaning portion 40. The section covered by the cleaning portion 40 is hereinafter referred to as "covered section 22". The section of the shaft portion 20 other than the "covered section 22" is an exposed section 28 which is not covered by the cleaning portion 40. In the embodiment, the covered section 22 has approximately the same length in the axial direction as the exposed section 28.

The cleaning portion 40 covering the covered section 22 of the shaft portion 20 is formed of a top end side cleaning portion 40a covering a predetermined section of the shaft portion 20 from the insertion end portion 22a to the base end side, and a base end side cleaning portion 40b covering a portion of the outer circumferential surface of the shaft portion 20 further in the base end side than the top end side cleaning portion 40a. A length ratio of the top end side body 40a to the base end side cleaning portion 40b is preferably from 1:0.2 to 1.3. When the top end side body 40a is longer than the base end side body 40b, the interdental cleaning tool 1 can move back and forth by a longer length through the interdental space without receiving a large resistive force. Meanwhile, when the base end side body 40b is longer than the top end side body 40a, a length used for effectively removing the deposit from the interdental space becomes longer. In the embodiment, the top end side cleaning portion 40a and the base end side cleaning portion 40b each constitute approximately a half of the covered section 22 in the axial direction.

Each of the top end side cleaning portion 40a and the base end side cleaning portion 40b may be molded with an elastomer material such as styrene elastomer, silicone, olefinic elastomer, and polyester elastomer or a composite material of an elastomer material containing a small amount of a reinforcing material such as glass fibers and talc. The composite material preferably contains the reinforcing material by 3% by weight to 50% by weight, inclusive, more preferably 5% by weight to 35% by weight, inclusive. However, the top end side cleaning portion 40a and the base end side cleaning portion 40b are molded with different molding materials different in hardness (that is, elastomer material or a composite material).

The top end side cleaning portion 40a is molded with a molding material having a higher hardness than the base end side cleaning portion 40b. A hardness ratio of the molding materials molded into the top end side cleaning portion 40a and the base end side cleaning portion 40b (= (hardness of top end side cleaning portion 40a)/(hardness of base end side cleaning portion 40b)) is preferably from 1.1 to 3, more preferably from 1.2 to 2, further preferably from 1.3 to 1.5, and particularly preferably from 1.3 to 1.4. The top end side cleaning portion 40a is preferably molded with a molding material having a Shore hardness of A2 to A90, more preferably a molding material having a Shore hardness of A15 to A85, and particularly preferably a molding material having a Shore hardness of A20 to A80. The base end side cleaning portion 40b is preferably molded with a molding material having a Shore hardness of A1 to A50, more preferably a molding material having a Shore hardness of A10 to A45, and particularly preferably a molding material having a Shore hardness of A15 to A40. The Shore hardness of each of the top end side cleaning portion 40a and the base end side cleaning portion 40b may be adjusted by changing the type of elastomer or by changing the added amount and/or the type of the reinforcing material. For example, the reinforcing material may be added to the elastomer material used for molding the top end side cleaning portion 40a by a larger amount than the reinforcing material to be added to the elastomer material used for molding the base end side cleaning portion 40b to provide the top end side cleaning portion 40a with a higher hardness than the base end side cleaning portion 40b.

The top end side cleaning portion 40a and the base end side cleaning portion 40b may be different not only in hardness but also in hue. The hue of the top end side cleaning portion 40a and the base end side cleaning portion 40b may be determined from a view point of fine appearance of the interdental cleaning tool 1. For example, the top end side cleaning portion 40a may be molded with a pink molding material while the base end side cleaning portion 40b may be molded with a green molding material.

The top end side cleaning portion 40a includes a top end side body 42a covering the top end side portion of the shaft portion 20 (that is, a portion of the shaft portion 20 extending from the insertion end portion 22a by a length of approximately half the length of the covered section 22), and a plurality of top end side bristles 48a each having a shape of a thin projection protruding outward from the outer circumferential surface of the top end side body 42a. The top end side body 42a prevents a direct contact between the oral tissues and the hard shaft portion 20. Each of a plurality of top end side bristles 48a protruding outward from the outer circumferential surface of the top end side body 42a elastically deforms while the top end side portion of the shaft portion 20 is passing the triangular space and recovers the shape after the top end side portion has passed the triangular space. As a result, each of the top end side bristles 48a can scrape out the deposit from the oral tissues. The lengths of a plurality of top end side bristles 48a are set so that the top end side bristle 48a disposed further in the base end side has a larger protruding amount from the top end side body 42b.

The base end side cleaning portion 40b is disposed further in the base end side than the top end side body 42a from which a plurality of top end side bristles 48a protrude. The base end side cleaning portion 40b includes a base end side body 42b covering a portion of the outer circumferential surface of the shaft portion 20 further in the base end side than the top end side body 42a, and a plurality of base end side bristles 48b each having a shape of a thin projection protruding outward from the base end side body 42b. The base end side body 42b forms a covering layer (an elastomer layer or a composite material layer) which is continuous in the axial direction from a layer (an elastomer layer or a composite material layer) of the top end side body 42a, and prevents a direct contact between the oral tissues and the hard shaft portion 20 in the rest of the section of the covered section 22. Like the top end side bristles 48a described above, when the base end side body 42b is inserted in the triangular space, each of a plurality of base end side bristles 48b protruding outward from the base end side body 42b elastically deforms and recovers the shape to scrape out the deposit from the oral tissues. Like a plurality of top end side bristles 48a, the lengths of a plurality of base end side bristles 48b are set so that the base end side bristle 48b disposed further in the base end side has a larger protruding amount from the base end side body 42b. The base end side bristle 48b disposed at the most top end side is longer than the top end side bristle 48a disposed at the most base end side. Thus, the protruding amount of the whole brush portion including the base end side bristles 48b and the top end side bristles 48a decreases from the base end side to the top end side.

A plurality of base end side bristles 48b molded with a molding material having a hardness lower than a plurality of top end side bristles 48a as described above is more susceptible to elastic deformation than a plurality of top end side bristles 48a. Thus, each of a plurality of base end side bristles 48b can bend so as to pass through the narrow space between the outer circumferential surface of the base end side body 42b and the oral tissues. As a result, the section in the axial direction where a plurality of base end side bristles 48b is provided can easily pass through the triangular space. The shaft portion 20 is thinner in the section in the axial direction where a plurality of top end side bristles 48a is provided than the section in the axial direction where a plurality of base end side bristles 48b is provided. Thus, a relatively wide space is created between the outer circumferential surface of the top end side body 42a and the oral tissues, the outer circumferential surface of the top end side body 42a covering the section in the axial direction of the shaft portion 20 where a plurality of top end side bristles 48a is provided. Since a wide space is created between the outer circumferential surface of the top end side body 42a and the oral tissues, the section in the axial direction where a plurality of top end side bristles 48a having a relatively high hardness is provided can easily pass through the triangular space. That is, the whole section where a plurality of top end side bristles 48a and a plurality of base end side bristles 48b are provided can be used for cleaning the triangular space.

As described above, for the section where a plurality of base end side bristles 48b is provided, a relatively narrow space is created between the outer circumferential surface of the base end side body 42b and the oral tissues. Thus, when a plurality of base end side bristles 48b protruding outward from the outer circumferential surface of the base end side body 42b is deformed to bend, the base end side bristles 48b can still tightly contact the oral tissues. As a result, a plurality of base end side bristles 48b can more effectively scrape out the deposit from the oral tissues.

A plurality of top end side bristles 48a which is harder than a plurality of base end side bristles 48b is less susceptible to deformation than a plurality of base end side bristles 48b when in contact with the oral tissues. Thus, a plurality of top end side bristles 48a also tightly contacts the oral tissues, and can effectively scrape out the deposit from the oral tissues. That is, the whole section where a plurality of top end side bristles 48a and a plurality of base end side bristles 48b are provided is capable of effectively scraping out the deposit from the oral tissues.

Since the shaft portion 20 is thin in the section where a plurality of top end side bristles 48a is provided, the top end side portion of the interdental cleaning tool 1 is easily inserted in the corner of the triangular space. Thus, the section where a plurality of top end side bristles 48a is provided easily enters the corner of the triangular space. That is, the section where a plurality of top end side bristles 48a is provided is suitably used for cleaning the corner of the triangular space. Meanwhile, since the shaft portion 20 is thicker in the section where a plurality of base end side bristles 48b is provided than the section where a plurality of top end side bristles 48a is provided, the section of the interdental cleaning tool 1 where a plurality of base end side bristles 48b is provided tightly contacts the side surfaces of the teeth forming the triangular space. Thus, the section where a plurality of base end side bristles 48b is provided is suitably used for cleaning the side surfaces of the teeth.

Since the molding material used for molding a plurality of base end side bristles 48b is different from the molding material used for molding a plurality of top end side bristles 48a not only in hardness but also in hue, the difference in hardness between a plurality of top end side bristles 48a and a plurality of base end side bristles 48b can be visually recognized.

In the embodiment described above, the hue of the top end side body 42a and a plurality of top end side bristles 48a is different from the hue of the base end side body 42b and a plurality of base end side bristles 48b. However, these hues may be the same.

In the embodiment described above, the top end side body 42a and the base end side body 42b form the molding material layers which are continuous in the axial direction. However, the top end side body and the base end side body may be formed at an interval in the axial direction.

In the embodiment described above, the top end side body 42a and the base end side body 42b each cover a part of axially extending section of the shaft portion 20 (that is, the covered section 22). However, the top end side body and the base end side body may cover the entire length of the shaft portion.

In the embodiment described above, the length of the top end side body 42a in the axial direction is approximately the same as the length of the base end side body 42b in the axial direction. However, the lengths of the top end side body and the base end side body may be determined so that the length ratio along the axial direction of the top end side body to the base end side body takes a different value.

In the embodiment described above, the grip portion 30 continuing from the shaft portion 20 covered by the base end side body 42b and the top end side body 42a has a form of a thin plate. However, the grip portion may have a different form that can be held by the fingers of the user.

In the embodiment described above, the cleaning portion contributing to cleaning of the interdental space has two portions different in hardness (that is, the top end side cleaning portion 40a and the base end side cleaning portion 40b). However, the cleaning portion may have more than two portions that are different in hardness.

### Industrial Applicability

The structure of the embodiment described above can suitably be used in a field of oral health.

### Reference Signs

- 1: interdental cleaning tool
- 10: base portion
- 20: shaft portion
- 40a: top end side cleaning portion
- 40b: base end side cleaning portion
- 42a: top end side body
- 42b: base end side body
- 48a: top end side bristle
- 48b: base end side bristle

## Claims

1. An interdental cleaning tool (1) comprising:
a base portion (10) including a shaft portion (20) that extends from a base end side to a top end side so as to be insertable in an interdental space and gradually becomes thinner from the base end side to the top end side;
a top end side cleaning portion (40a) including a top end side body (42a) covering a top end side portion of the shaft portion (20), and a plurality of top end side bristles (48a) protruding outward from an outer circumferential surface of the top end side body (42a); and
a base end side cleaning portion (40b) including a base end side body (42b) covering a portion of the shaft portion (20) further in the base end side than the top end side body (42a), and a plurality of base end side bristles (48b) protruding outward from an outer circumferential surface of the base end side body (42b),
**characterized in that**
the top end side cleaning portion (40a) is molded with a molding material having a higher hardness than a molding material molded into the base end side cleaning portion (40b).

2. The interdental cleaning tool (1) according to claim 1, wherein the top end side cleaning portion (40a) has a hue different from a hue of the base end side cleaning portion (40b).

3. The interdental cleaning tool (1) according to claim 1 or 2, wherein the top end side cleaning portion (40a) is made of a composite material including elastomer and a reinforcing material.

## Patentansprüche

1. Interdentalreinigungswerkzeug (1), umfassend:
einen Basisabschnitt (10), der einen Stielabschnitt (20) einschließt, der sich von einer Basisendseite zu einer oberen Endseite so erstreckt, dass er in einen Interdentalraum eingeführt werden kann und von der Basisendseite zur oberen Endseite schrittweise dünner wird;
einen Reinigungsabschnitt (40a) der oberen Endseite, der einen oberen Endseitenkörper (42a) einschließt, der einen oberen Endseitenabschnitt des Stielabschnitts (20) abdeckt, und eine Vielzahl von oberen Endseitenborsten (48a), die von einer Außenumfangsfläche des oberen Endseitenkörpers (42a) nach außen vorstehen; und
einen Reinigungsabschnitt (40b) der Basisendseite, der einen Basisendseitenkörper (42b) einschließt, der einen Abschnitt des Stielabschnitts (20) weiter in der Basisendseite als der obere Endseitenkörper (42a) abdeckt, und eine Vielzahl von Basisendseitenborsten (48b), die von einer Außenumfangsfläche des Basisendseitenkörpers (42b) nach außen vorstehen, **dadurch gekennzeichnet, dass**
der Reinigungsabschnitt (40a) der oberen Endseite mit einem Formmaterial geformt ist, das eine höhere Härte aufweist als ein Formmaterial, das in den Reinigungsabschnitt (40b) der Basisendseite geformt ist.

2. Interdentalreinigungswerkzeug (1) nach Anspruch 1, wobei der Reinigungsabschnitt (40a) der oberen Endseite einen Farbton aufweist, der von dem Farbton des Reinigungsabschnitt (40b) der Basisendseite unterschiedlich ist.

3. Interdentalreinigungswerkzeug (1) nach Anspruch 1 oder 2, wobei der Reinigungsabschnitt (40a) der oberen Endseite aus einem Verbundwerkstoff hergestellt ist, der Elastomer und einen Verstärkungswerktoff einschließt.

## Revendications

1. Outil (1) de nettoyage interdentaire comprenant :
une partie (10) base incluant une partie (20) tige qui s'étend d'une extrémité proximale à une extrémité distale de manière à pouvoir être insérée dans un espace interdentaire et à devenir progressivement plus mince de l'extrémité proximale à l'extrémité distale ;
partie (40a) de nettoyage d'extrémité distale incluant un corps (42a) d'extrémité distale recouvrant une partie d'extrémité supérieure de la partie (20) d'arbre, et une pluralité de poils (48a) d'extrémité distale faisant saillie vers l'extérieur à partir d'une surface circonférentielle extérieure du corps (42a) d'extrémité distale ; et
une partie (40b) de nettoyage d'extrémité proximale incluant un corps (42b) d'extrémité proximale recouvrant une partie de la partie (20) tige plus loin dans l'extrémité proximale que le corps (42a) d'extrémité distale, et une pluralité de poils (48b) de l'extrémité proximale faisant saillie vers l'extérieur à partir d'une surface circonférentielle extérieure du corps (42b) d'extrémité proximale,
**caractérisé en ce que**
la partie (40a) de nettoyage d'extrémité distale est moulée avec un matériau de moulage ayant une dureté supérieure à un matériau de moulage moulé sur la partie (40b) de nettoyage d'extrémité proximale.

2. Outil (1) de nettoyage interdentaire selon la revendication 1, dans lequel la partie (40a) de nettoyage d'extrémité distale a une teinte différente de la teinte de la partie (40b) de nettoyage de l'extrémité proximale.

3. Outil (1) de nettoyage interdentaire selon la revendication 1 ou la revendication 2, dans lequel la partie (40a) de nettoyage d'extrémité distale est réalisée en un matériau composite incluant de l'élastomère et un matériau de renforcement.
